# EUROPÄISCHE PATENTSCHRIFT

(11) **EP 1 109 297 B1**
(45) Veröffentlichungstag und Bekanntmachung des Hinweises auf die Patenterteilung: **04.06.2003**
(21) Anmeldenummer: 00126621.2
(22) Anmeldetag: 04.12.2000
(51) Int. Cl.: H02K 9/04

(54) **Lüfterradgekühlter elektromotorischer Antrieb**
Fan cooled electric motor drive
Moteur électrique d'entraînement refroidi par ventilateur

(30) Priorität: 16.12.1999 DE 19960839
(43) Veröffentlichungstag der Anmeldung: 20.06.2001
(73) Patentinhaber: SIEMENS AKTIENGESELLSCHAFT, 80333 München (DE)
(72) Erfinder: Dorr, Gerhard, Dipl.-Ing. (FH), 90584 Allersberg (DE); Langer, Anton, Dipl.-Ing., 90491 Nürnberg (DE)

(56) Entgegenhaltungen:
- DE-A- 1 538 974
- DE-B- 1 134 453
- DE-C- 259 034
- GB-A- 2 139 011
- US-A- 2 613 240
- US-A- 3 456 141

## Beschreibung

Die Erfindung betrifft einen elektromotorischen Antrieb, insbesondere für Schienenfahrzeuge und spurgebundene Fahrzeuge, mit einem Fahrmotor und wenigstens einem gegenüber der Fahrmotorwelle frei drehbar gelagerten Lüfterrad.

Elektromotoren für Schienen- und spurgebundene Fahrzeuge, wie Drehstrom-Bahnmotoren, werden in zunehmendem Maße mit hohen Drehzahlen betrieben, um die Motor-Drehmomente und somit das Motorgewicht wie auch die Bauform klein zu halten. Gemäß der DE-B-25 14 265 ist zur Motorkühlung ein fest auf der Motorwelle angeordnetes Lüfterrad vorgesehen, das mit der jeweiligen Motordrehzahl angetrieben wird und die Umgebungsluft entweder durch den Motor oder durch spezielle Außenkühlkanäle saugt oder drückt. Bei der Anordnung des Lüfterrades auf der Motorwelle wird der Lüfter über die Motorwelle direkt angetrieben, d.h. der Lüfter hat stets die gleiche Drehzahl und Drehrichtung wie die Motorwelle.

Bei schnell laufenden Motoren, insbesondere Bahnmotoren, wird die Schallemission in der Regel von dem Lüfter bestimmt. Dies kann zu Schwierigkeiten bei der Einhaltung von Geräuschgrenzwerten führen. Bekannterweise sind Axiallüfter leiser als Radiallüfter, weshalb sie auch bei größeren zweipoligen Industriemotoren eingesetzt werden. Da sie aber drehrichtungsgebunden arbeiten, sind sie nicht ohne weiteres bei Bahnmotoren verwendbar, die für den Betrieb in beiden Drehrichtungen ausgelegt sind. Aus der DE-B-11 99 939 ist es bekannt um einen Lüfter unabhängig von der Drehrichtung des Motors stets in der Drehrichtung mit der höheren Förderleistung drehen zu lassen ein Umlenkgetriebe vorzusehen. Wegen des mit einem Umlenkgetriebe oder mit verstellbaren Lüfterschaufeln oder mit zwei Lüftern mit entgegengesetzter Förderrichtung verbundenen Mehraufwandes akzeptiert man in der Praxis die Nachteile des eingangs beschriebenen Direktlüfters, der je nach Drehrichtung des Motors dann im Links- und Rechtslauf über die Motorwelle angetrieben wird.

Um von der Umgebungsluft und der Luftfördermenge des Motors unabhängig zu sein, wurden auch schon aufwendige Fremdkühlsystems vorgeschlagen, die entweder auf der Basis einer Fremdbelüftung mit Luftführung und eigenem Gebläsemotor oder auf der Basis einer Wasserkühlung arbeiten. Diese Kühlsysteme und ihre Steuerungen sind ebenfalls sehr aufwendig.

Um das durch einen Ventilator mit zunehmender Rotationsgeschwindigkeit ansteigende Motorengeräusch zu reduzieren, ist aus der CH-A-664 242 ein Kühlluftventilator für eine drehende elektrische Maschine bekannt, mit einem an einem Joch befestigten Stator und einem auf einer drehbar auf dem Joch gestützten Welle befestigten Rotor, wobei der Kühlluftventilator drehbar mittels eines Lagers auf der Welle angeordnet ist. Eine Mehrzahl von Magnetpaaren ist auf dem Rotor oder dem Ventilator befestigt. Eine nicht eisenhaltige Scheibe ist am Ventilator oder am Rotor befestigt und weist einen ringförmigen, zwischen den Magnetpaaren angeordneten Flansch auf. Der Ventilator wird durch die Wechselwirkung zwischen den Magneten und im Scheibenflansch induzierten Wirbelströmen angetrieben. Es tritt ein als Funktion der Geschwindigkeit ansteigender Schlupf auf, wobei der durch den Ventilator bewirkte Geräuschpegel reduziert wird. Da bei dieser Ausführung die Lüfterleistung im niedrigen Drehzahlbereich nur gering ist, ist die Verwendung dieser Anordnung beschränkt.

Aus der DE 15 38 974 ist eine Einrichtung zur Fremdbelüftung elektrischer Maschinen bekannt, die aus einem Drehfeldmotor insbesondere einem Induktionsmotor mit Kurzschlussläufer, sowie einem von diesem angetriebenen Lüfter besteht. Um einen Anbau des Lüftermotors außerhalb des Lagerschildes der Maschine zu vermeiden, wurde vorgeschlagen den Lüftermotor innerhalb des Maschinengehäuses anzuordnen als Außenläufermotor auszubilden und den Lüfter mit der axialer Richtung neben dem Hilfsmotor liegenden Flügel am Außenläufer zu befestigen. Nachteilig dabei ist, dass sich dabei die axiale Länge des gesamten Motors vergrößert.

Dieser Nachteil wird auch durch die US 3,456,141 erreicht, bei der die axiale Länge des drehmomentschaffenden Rotors verkürzt wird zugunsten eines Rotors der in axialer Verlängerung dieses Hilfsrotors Lüfterflügel trägt. Damit wird zwar die axiale Länge des gesamten Fahrmotors reduziert, dies führt aber zu einer Verringerung des abzugebenden Drehmoments.

Aufgabe der Erfindung ist es einen elektromotorischen Antrieb der eingangs genannten Art bezüglich Kühlung, Funktionssicherheit und Aufbau derart zu verbessern, dass keinerlei Einbußen des Fahrmotors aufgrund des Einbaus auftreten.

Erfindungsgemäß wird diese Aufgabe durch die Merkmale des Patentanspruches 1 gelöst. Damit kann der Fahrmotor durch den eigenständig betreibbaren Lüfter mit einer Gebläseleistung gekühlt werden, die dem jeweiligen Fahrbetrieb angepaßt ist. Die Anordnung des Lüftermotors zwischen der Lüfterradnabe und dem Fahrmotorgehäuse ermöglicht den Einbau eines integrierten Fremdlüfters, ohne daß dadurch ein wesentlicher zusätzlicher Platzbedarf für den Lüfterantrieb und aufwendige Kühlluftkanäle erforderlich sind. Nach der Erfindung kann zur Kühlung des Fahrmotors ein geräuscharm arbeitender Axiallüfter vorgesehen werden, dessen Lüfterrad, da es drehrichtungsunabhängig von der im Links- und Rechtslauf angetriebenen Fahrmotorwelle antreibbar ist, für eine optimierte Förderleistung mit rückwärts gekrümmten Schaufeln ausgebildet wird.

Vorteilhafte Ausgestaltungen der Erfindung sind in den weiteren Patentansprüchen angegeben.

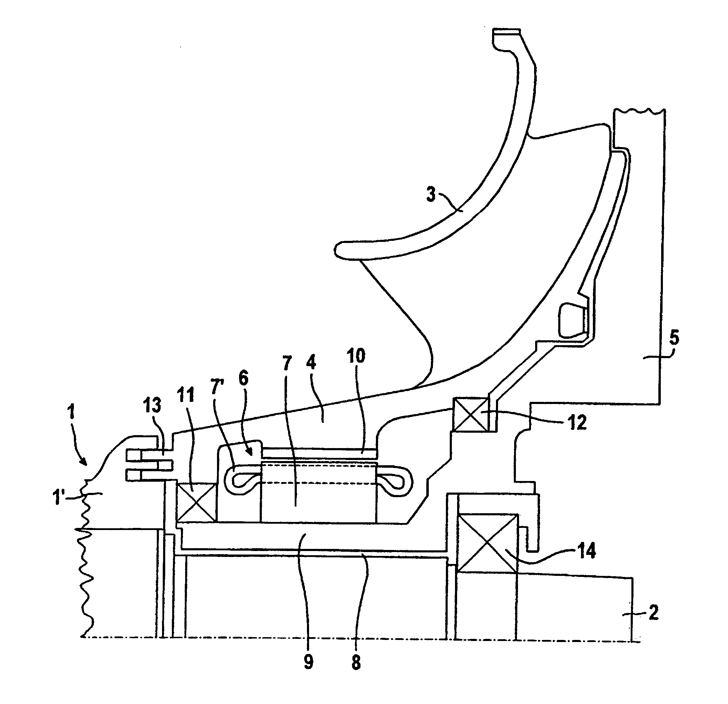

Die Erfindung wird im folgenden an einem Ausführungsbeispiel unter Hinweis auf die Zeichnung erläutert, die einen Teilschnitt durch einen erfindungsgemäßen elektromotorischen Antrieb mit einem Lüfterrad zur Kühlung eines Fahrmotors zeigt.

Von einem an sich bekannten, als Fahrmotor 1 bezeichneten Elektromotor ist ein Teil des Läufers 1' und der Fahrmotorwelle 2 mit einem Lager 14 dargestellt. Ein Fahrmotorgehäuseteil oder Lagerschild 5 des Fahrmotors 1 stützt sich über das Lager 14 auf der Motorwelle 2 ab und bildet eine Lagerbuchse 9, welche mit einem Abstand 8 in Form eines Ringspaltes konzentrisch um die Fahrmotorwelle 2 angeordnet ist.

Zum Antrieb eines Lüfterrades 3, das zur Kühlung des Fahrmotors 1 dient, ist der Stator 7 mit seiner Statorwicklung 7' eines Lüftermotors 6, z.B. ein Asynchronmotor, auf der Buchse 9 des Lagerschildes 5 befestigt. Der Wicklungsanschluß des Lüftermotors 6 erfolgt über nicht gezeichnete Bohrungen im Lagerschild 5.

In die Lüfterradnabe 4 des Lüfterrades 3, welches sich über Lager 11, 12 auf dem Lagerschild 5 des Fahrmotors 1 abstützt, ist ein Außenläufer 10 des Lüftermotors 6 integriert bzw. eingebaut. Der Lüftermotor wird über eine externe Spannungsversorgung betrieben, beispielsweise unter Verwendung eines nicht gezeichneten Hilfsbetriebeumrichters. Im schematisch gezeichneten Ausführungsbeispiel ist die Lüfterradnabe 4 über Gleit- und/oder Dichtmittel 13 gegenüber dem Fahrmotor 1 geführt.

Durch die vollständige Entkopplung von der Fahrmotorwelle 2 ist der Lüftermotor 6 drehrichtungsunabhängig und drehzahlregelbar. Dadurch kann das Lüfterrad 3 mit rückwärts gekrümmten Schaufeln ausgeführt und damit bezüglich seiner Förderleistung optimiert werden. Darüber hinaus ist im Bereich der niedrigen Motordrehzahl des Fahrmotors eine ausreichende Kühlluftmenge für den Fahrmotor erreichbar, wenn der Lüftermotor entsprechend mit der erforderlichen hohen Drehzahl betrieben wird. Der Lüftermotor ist unter dem Lüfterrad im Bereich unter dem Wickelkopf des Fahrmotors eingebaut, so daß dadurch kein zusätzlicher Einbauraum für den Lüftermotor benötigt wird. Gleichzeitig wird der Lüftermotor optimal vor Verschmutzung und Beschädigung geschützt.

## Patentansprüche

1. Elektromotorischer Antrieb, insbesondere für Schienenfahrzeuge und spurgebundene Fahrzeuge, mit einem Fahrmotor (1) und wenigstens einem gegenüber der Fahrmotorwelle (2) frei drehbar gelagerten Lüfterrad (3), das über einen zwischen der Lüfterradnabe (4) und einem Fahrmotorgehäuseteil (5) angeordneten elektrischen Lüftermotor (6) antreibbar ist,
**dadurch gekennzeichnet, dass** der Lüftermotor (6) unter dem Lüfterrad im Bereich unter dem Wickelkopf des Fahrmotors (1) eingebaut ist.

2. Antrieb nach Anspruch 1, wobei das Lüfterrad (3) drehrichtungsunabhängig von der Fahrmotorwelle (2) und/oder drehzahlregelbar antreibbar ist.

3. Antrieb nach Anspruch 1, wobei der Lüftermotor (6) als Asynchronmotor mit Kurzschlußläufer oder mit einem Läufer mit Permanentmagneten ausgeführt ist.

4. Antrieb nach Anspruch 1, wobei ein Axiallüfter vorgesehen ist, dessen Lüfterrad mit rückwärts gekrümmten Schaufeln ausgebildet ist.

5. Antrieb nach Anspruch 1, wobei der Lüftermotor (6) zwischen der Lüfterradnabe (4) und einem Lagerschild (5) des Fahrmotorgehäuses angeordnet ist.

6. Antrieb nach Anspruch 1 und 5, wobei der Stator (7) des Lüftermotors (6) mit der Statorwicklung (7') auf einer die Fahrmotorwelle (2) mit Abstand (8) umgebenden Lagerbuchse (9) des Lagerschildes (5) sitzt und ein Außenläufer (10) des Lüftermotors (6) in der Lüfterradnabe (4) angeordnet ist.

7. Antrieb nach einem der Ansprüche 1 bis 6, wobei der Wicklungsanschluß des Lüftermotors (6) durch Bohrungen od.dgl. des Lagerschildes (5) geführt ist.

8. Antrieb nach einem der Ansprüche 1 bis 7, wobei das Lüfterrad (3) beidseits des Lüftermotors (6) über Lager (11, 12) auf dem Lagerschild (5) gelagert ist.

9. Antrieb nach einem der Ansprüche 1 bis 8, wobei die Lüfterradnabe (4) über Gleit- und/oder Dichtmittel (13) gegenüber dem Fahrmotor (1) geführt ist.

## Claims

1. Electromotive drive system, in particular for rail vehicles and rail-borne vehicles, with a traction motor (1) and at least one fan wheel (3), which can rotate freely relative to the traction motor shaft (2) and which can be driven by means of an electric fan motor located between the centre (4) of the fan wheel and a part of the fan motor housing (5), **characterised in that** the fan motor (6) is integrated below the fan wheel in the area below the end windings of the traction motor (1).

2. Drive system according to Claim 1, in which the fan wheel (3) can be driven independently of the direction of rotation of the traction motor shaft (2) and/or at adjustable speed.

3. Drive system according to Claim 1, in which the fan motor (6) is configured as an asynchronous motor with a short-circuit rotor or with a rotor with permanent magnets.

4. Drive system according to Claim 1, in which an axial fan is provided, the fan wheel of which is configured with its blades curved backwards.

5. Drive system according to Claim 1, in which the fan motor (6) is located between the centre (4) of the fan wheel and an end plate (5) of the traction motor housing.

6. Drive system according to Claims 1 and 5, in which the stator (7) of the fan motor (6) rests with the stator winding (7') on a bearing bush (9) of the end plate (5) surrounding the traction motor shaft (2) at distance (8) and an external rotor (10) of the fan motor (6) is located in the centre (4) of the fan wheel.

7. Drive system according to one of Claims 1 to 6, in which the winding connection on the fan motor (6) passes through holes etc. in the end plate (5).

8. Drive system according to one of Claims 1 to 7, in which the fan wheel (3) is positioned on both sides of the fan motor (6) by means of bearings (11, 12) on the end plate (5).

9. Drive system according to one of Claims 1 to 8, in which the centre (4) of the fan wheel is moved relative to the traction motor (1) by means of sliding and/or sealing devices (13).

## Revendications

1. Entraînement à moteur électrique, notamment pour des véhicules ferroviaires et des véhicules guidés, comportant un moteur (1) de traction et au moins une roue (3) de ventilateur, qui est montée à libre rotation par rapport à l'arbre (2) du moteur de traction et qui peut être entraînée au moyen d'un moteur (6) électrique de ventilateur disposé entre le moyeu (4) de la roue de ventilateur et une partie (5) du carter du moteur de traction, **caractérisé en ce que** le moteur (6) de ventilateur est monté sous la roue de ventilateur dans la région située en dessous de la tête de bobinage du moteur (1) de traction.

2. Entraînement suivant la revendication 1, dans lequel la roue (3) de ventilateur peut être entraînée dans un sens de rotation indépendant de l'arbre (2) du moteur de traction, et/ou à une vitesse pouvant être régulée.

3. Entraînement suivant la revendication 1, dans lequel le moteur (6) de ventilateur est réalisé sous forme de moteur asynchrone doté d'un rotor en court-circuit ou d'un rotor à aimants permanents.

4. Entraînement suivant la revendication 1, dans lequel il est prévu un ventilateur axial dont la roue de ventilateur est réalisée à pales courbées vers l'arrière.

5. Entraînement suivant la revendication 1, dans lequel le moteur (6) de ventilateur est disposé entre le moyeu (4) de la roue de ventilateur et un flasque (5) du carter du moteur de traction.

6. Entraînement suivant les revendications 1 et 5, dans lequel le stator (7) du moteur (6) de ventilateur repose par son bobinage (7') de stator sur un coussinet (9) du flasque (5) entourant à distance (8) l'arbre (2) du moteur de traction, et un rotor extérieur (10) du moteur (6) de ventilateur est disposé dans le moyeu (4) de la roue de ventilateur.

7. Entraînement suivant l'une des revendications 1 à 6, dans lequel le raccordement du bobinage du moteur (6) de ventilateur passe dans des perçages ou analogues du flasque (5).

8. Entraînement suivant l'une des revendications 1 à 7, dans lequel la roue (3) de ventilateur est montée, de part et d'autre du moteur (6) de ventilateur, au moyen de paliers (11, 12) sur le flasque (5).

9. Entraînement suivant l'une des revendications 1 à 8, dans lequel le moyeu (4) de la roue de ventilateur est guidé par rapport au moteur (1) de traction par l'intermédiaire de moyens (13) de glissement et/ou d'étanchéité.
